# EUROPÄISCHE PATENTSCHRIFT

(11) **EP 3 584 026 B1**
(45) Veröffentlichungstag und Bekanntmachung des Hinweises auf die Patenterteilung: **01.01.2025**
(21) Anmeldenummer: 18178813.4
(22) Anmeldetag: 20.06.2018
(51) Int. Cl.: B23F 23/12, G05B 19/401

(54) **VERFAHREN ZUM HARTBEARBEITEN EINES VORVERZAHNTEN UND WÄRMEBEHANDELTEN ZAHNRAD-WERKSTÜCKS**
METHOD FOR HARD MACHINING OF A ROUGHLY CUT AND HEAT-TREATED TOOTHED WHEEL WORK PIECE
PROCÉDÉ D'USINAGE DUR D'UNE PIÈCE À USINER FORMANT ROUE DENTÉE DENTÉE ET TRAITÉE THERMIQUEMENT

(43) Veröffentlichungstag der Anmeldung: 25.12.2019
(73) Patentinhaber: Klingelnberg GmbH, 42499 Hückeswagen (DE)
(72) Erfinder: Predki, Thomas, 48455 Bad Bentheim (DE)
(74) Vertreter: Janke Scholl Patentanwälte PartG mbB

(56) Entgegenhaltungen:
- EP-A1- 2 246 658
- EP-A1- 2 946 865
- EP-B1- 2 314 404
- JP-A- H0 911 085

## Beschreibung

### Gebiet der Erfindung

Gegenstand der Erfindung ist ein Verfahren zum Hartbearbeiten eines vorverzahnten und wärmebehandelten Zahnrad-Werkstücks. Technologischer Hintergrund

Es gibt verschiedene Ansätze zum Hartbearbeiten von Zahnrädern. Als Hartbearbeiten werden diejenigen Verfahren bezeichnet, die nach der Wärmebehandlung eines Zahnrad-Werkstücks folgen, wobei die Wärmebehandlung durchgeführt wird, um das Zahnrad-Werkstück mit einer Härteschicht zu versehen. Das Dokument EP2314404B1 beschreibt ein Verfahren zur Hartfeinbearbeitung einer Verzahnung gemäß dem Oberbegriff des unabhängigen Anspruchs 1.

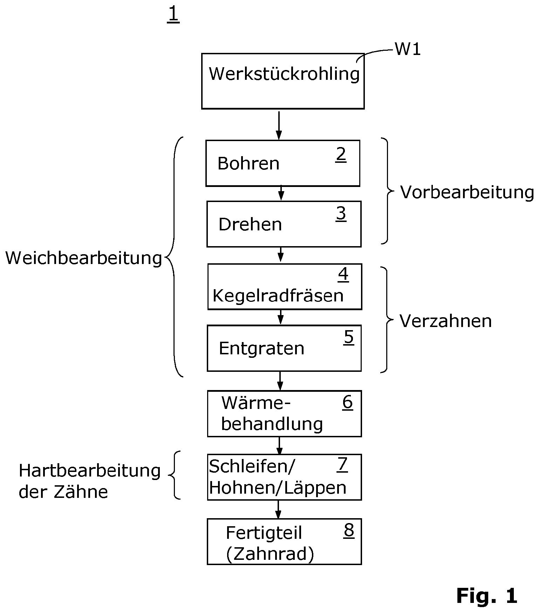

Fig. 1 zeigt eine schematische Darstellung eines beispielhaften Verfahrensablaufs 1 des Standes der Technik. Es handelt sich um ein Beispiel für die Verzahnungsbearbeitung eines Kegelrades. Ausgehend von einem Werkstückrohling W1 werden in dem gezeigten Beispiel folgende Weichbearbeitungsschritte durchgeführt. Es kann zum Beispiel eine (Zentral-) Bohrung durch Bohren (Schritt 2) erzeugt werden. Dann kann mit einem Drehstahl der Werkstückrohling W1 durch Drehen (Schritt 3) bearbeitet werden. Diese Schritte werden auch als Vorform-Herstellung oder als Vorbearbeitung bezeichnet. Im Rahmen der Vorform-Herstellung können auch andere Schritte oder alternative Schritte ausgeführt werden. Am Ende der Vorform-Herstellung wird hier das Werkstück als Zahnrad-Werkstück bezeichnet.

Nun folgt das sogenannte Verzahnen. Das Zahnrad-Werkstück kann z.B. mittels Kegelradfräsen (Schritt 4) bearbeitet werden, um an dem Zahnrad-Werkstück Zähne, bzw. Zahnlücken zu erzeugen. Dann folgt als optionaler Schritt das Entgraten (Schritt 5).

Anschliessend folgt typischerweise eine Wärmebehandlung (Schritt 6), um das Zahnrad-Werkstück zu härten. Anschliessend folgt beispielsweise eine Nachbearbeitung der Zähne (Schritt 7). Diese Nachbearbeitung wird hier als Zahn-Hartbearbeitung bezeichnet. Andere Schritte der Nachbearbeitung, die typischerweise durchgeführt werden, sind hier nicht gesondert erwähnt. Dann ist im Schritt 8 das Kegelrad fertig.

Es kann durch die Wärmebehandlung im Schritt 6 dazu kommen, dass das Zahnrad-Werkstück einen sogenannten Härteverzug zeigt. Bei einem solchen Härteverzug handelt es sich um eine Volumenänderung des Zahnrad-Werkstücks.

In der Verzahnungsbearbeitung von großen und sehr kostspieligen Zahnrädern, erfolgt die Hartbearbeitung der Zähne daher mit größter Vorsicht, um zu vermeiden, dass das Werkzeug z.B. mit zu großer Zustellbewegung mit einer Zahnflanke oder einer Kopffläche eines der Zähne des Zahnrad-Werkstücks kollidiert, oder dass es zu Schleifbrand am Zahnrad-Werkstück kommt, weil von dem Werkzeug eine zu große Abtragsleistung abverlangt wird. Alternativ kann ein solches Zahnrad-Werkstück nach dem Härten einer genauen 3-dimensionalen Vermessung unterzogen werden (z.B. in einem Koordinaten-Messzentrum), um den konkreten Härteverzug zu ermitteln, bevor die Hartbearbeitung (Schritt 7) geplant und ausgeführt wird.

Auch in der Serienproduktion von Zahnrädern müssen Maßnahmen getroffen werden, um etwaige Härteverzüge bei der Hartbearbeitung (Schritt 7) zu berücksichtigen, damit z.B. das Werkzeug beim Zustellen nicht zu weit eingetaucht wird und dadurch die Härteschicht am Zahnrad-Werkstück beseitigt oder teilweise durchdringt. Das Dokument EP 2 946 865 A1 beschreibt ein Verfahren zum Einmitten eines Werkzeugs nach einem Härten einer evolventischen Stirnverzahnung.

Es ist daher eine Aufgabe der Erfindung ein Verfahren bereit zu stellen, das geeignet ist die Probleme, die sich aus dem Härteverzug eines Zahnrad-Werkstücks ergeben können, zu vermeiden, oder das geeignet ist den Einfluss des Härteverzuges auf die Effizienz der Hartbearbeitung zu reduzieren.

Gemäß Erfindung wird ein Verfahren zum Hartbearbeiten der Zähne eines vorverzahnten und wärmebehandelten Zahnrad-Werkstücks bereit gestellt. Im Rahmen dieses Verfahrens kommt ein Werkzeug 10 in einer Zahnrad-Bearbeitungsmaschine zum Einsatz, die mehrere NC-gesteuerte Achsen umfasst, deren Bewegungen über eine NC-Steuerung steuerbar sind und wobei die Zahnrad-Bearbeitungsmaschine Sensoren und/oder Messgeber aufweist. Das Verfahren umfasst die folgenden Schritte, die nicht zwingend in der gegebenen Reihenfolge ausgeführt werden müssen:
- Bereitstellen von Soll-Daten des Zahnrad-Werkstücks,
- Ermitteln einer ersten Relativbewegung des Werkzeugs relativ zum Zahnrad-Werkstück anhand der Soll-Daten,
- Ausführen der ersten Relativbewegung, wobei die NC-Steuerung das Werkzeug durch das Ausführen der ersten Relativbewegung kontrolliert mit dem Zahnrad-Werkstück - vorzugsweise mit einem Zahn des Zahnrad-Werkstücks - in Kontakt bringt,
- Bereitstellen von Echtzeit-Messwerten und Bewegungsdaten mittels der Sensoren und/oder Messgeber während des Ausführens der ersten Relativbewegung,
- Vornehmen einer Auswertung der Echtzeit-Messwerte zusammen mit den Bewegungsdaten und Ermitteln angepasster, werkstückspezifischer Relativbewegungen,
- Hartbearbeiten mindestens eines Bereichs eines Zahnes des Zahnrad-Werkstücks, wobei die NC-Steuerung die angepassten, werkstückspezifischen Relativbewegungen des Werkzeugs relativ zu dem Zahnrad-Werkstück ausführt.

Gemäß Erfindung wird das 3-dimensionale Vermessen des Zahnrad-Werkstücks durch ein Verfahren ersetzt, bei dem sogenannte Maschinentraces (hier als Echtzeit-Messwerte und Bewegungsdaten bezeichnet) bereitgestellt und ausgewertet werden. Anhand dieser Maschinentraces wird dann der Bearbeitungsablauf für die Hartbearbeitung mindestens eines Zahnes des Zahnrad-Werkstücks angepasst. D.h., es werden angepasste, werkstückspezifische Relativbewegungen ermittelt, die der Tatsache Rechnung tragen, dass sich das Zahnrad-Werkstück bei der Wärmebehandlung z.B. verzogen hat.

Der Begriff "angepasste, werkstückspezifische Relativbewegungen" wird hier verwendet, um aufzuzeigen, dass die Relativbewegungen, die beim Hartbearbeiten mindestens eines Zahnes ausgeführt werden, aufgrund der geänderten Form des Zahnrad-Werkstücks angepasst wurden. Wenn man anhand der Soll-Daten des Zahnrad-Werkstücks die Soll-Relativbewegungen zum Hartbearbeiten ermitteln würde, so würden sich diese Soll-Relativbewegungen von den angepassten, werkstückspezifischen Relativbewegungen unterscheiden.

Erfindungsgemäß wird in einem Zwischenschritt anhand der Soll-Daten eine (Soll-)Bewegungssequenz vorgegeben (z.B. berechnet). Es handelt sich hierbei um eine theoretische Bewegungssequenz, die beim Hartbearbeiten mindestens eines Zahnes des Zahnrad-Werkstücks auszuführen wäre, wenn dieses nach der Wärmebehandlung 1:1 mit dem Soll-Werkstück übereinstimmen würde.

Bei diesen Ausführungsformen gemäß Anspruch 1 werden in einem weiteren Schritt Ergebnisse der Auswertung eingesetzt, um eine angepasste, werkstückspezifische Bewegungssequenz zu ermitteln, wobei diese angepasste, werkstückspezifische Bewegungssequenz die Relativbewegungen definiert, die beim Hartbearbeiten mindestens eines Zahnes des Zahnrad-Werkstücks ausgeführt werden. Diese angepasste, werkstückspezifische Bewegungssequenz unterscheidet sich von der (Soll-)Bewegungssequenz.

Das Ermitteln der angepassten, werkstückspezifischen Bewegungssequenz kann bei mindestens einem Teil der Ausführungsformen dadurch erfolgen, dass ein rechnergestütztes Anpassen der vorgegebenen Bewegungssequenz anhand der Ergebnisse der Auswertung vorgenommen wird.

Bei mindestens einem Teil der Ausführungsformen ist die Auswertung der Echtzeit-Messwerte zusammen mit Bewegungsdaten speziell dazu ausgelegt, die Ist-Geometrie des Zahnrad-Werkstücks nach einer Wärmebehandlung und vor dem Hartbearbeiten zu bestimmen.

Bei diesen Ausführungsformen kann die Auswertung erfolgen, um eine Abweichung der Ist-Geometrie des Zahnrad-Werkstücks nach der Wärmebehandlung gegenüber einer Soll-Geometrie des Zahnrad-Werkstücks zu ermitteln.

Bei mindestens einem Teil der Ausführungsformen wird das Bereitstellen der Echtzeit-Messwerte mittels der Sensoren und/oder Messgeber in der Zahnrad-Bearbeitungsmaschine vorgenommen, um Kontaktpunkte und/oder -bereiche, die beim Ausführen der ersten Relativbewegung zwischen dem Werkzeug und dem Zahnrad-Werkstück auftreten, zu ermitteln (z.B. im 3-dimensionalen Raum festzulegen). Diese Kontaktpunkte und/oder -bereiche können bei allen Ausführungsformen beispielsweise an den Zähnen des Zahnrad-Werkstücks liegen, sie können aber auch an anderen Stellen oder Bereichen des Zahnrad-Werkstücks ermittelt werden.

Bei diesen Ausführungsformen kann in einem Teilschritt des Verfahrens anhand der Kontaktpunkte und/oder -bereiche eine Unwucht oder ein Wärmeverzug des Zahnrad-Werkstücks ermittelt und im 3-dimensionalen Raum definiert werden. Dies kann z.B. geschehen, um die Unwucht oder den Wärmeverzug anzuzeigen, zu dokumentieren oder um anhand der Unwucht oder des Wärmeverzugs die angepassten, werkstückspezifischen Relativbewegungen zu berechnen.

Bei mindestens einem Teil der Ausführungsformen werden die angepassten, werkstückspezifischen Relativbewegungen vorgegeben, um eine Beschädigung des Werkzeugs zu vermeiden (z.B. durch Kollision) und/oder um Schleifbrand am Zahnrad-Werkstück zu vermeiden (z.B. weil das Werkzeug mit einem zu großen Zustellung in Material des Zahnrad-Werkstücks eindringt) und/oder um zu vermeiden, dass im Rahmen des Hartbearbeitens des Zahnrad-Werkstücks das Werkzeug eine Härteschicht des Zahnrad-Werkstücks durchdringt.

Bei mindestens einem Teil der Ausführungsformen umfassen die angepassten, werkstückspezifischen Relativbewegungen mindestens einen geänderten Fahrweg (bzw. einen geänderten Bewegungspfad) des Werkzeugs relativ zum Zahnrad-Werkstück.

Bei mindestens einem Teil der Ausführungsformen wird die erste Relativbewegung so ausgeführt, dass mindestens eine Zahnflanke eines Zahnes des Zahnrad-Werkstücks mit dem Werkzeug berührt wird, wobei während des Ausführens der ersten Relativbewegung die Echtzeit-Messwerte und Bewegungsdaten mittels der Sensoren und/oder Messgeber bereit gestellt werden. Durch das Bereitstellen dieser Echtzeit-Messwerte und Bewegungsdaten kann quasi diese Berührung im 3-dimensionalen Raum definiert/festgestellt werden.

Das Verfahren der Erfindung kann aber nicht nur eingesetzt werden, um Beschädigungen zu vermeiden, sondern es kann auch eingesetzt werden, um Relativbewegungen werkstückspezifisch zu optimieren. In diesem Zusammenhang kann z.B. vermieden werden, dass sich das Werkzeug unnötig lange in der Luft dreht, bevor es zu einem ersten produktiven Kontakt mit dem Zahnrad-Werkstück kommt. Durch den Einsatz der Erfindung kann auch erreicht werden, dass unproduktive Bewegungsabläufe ganz vermieden werden.

Ein Ausführungsbeispiel der Erfindung wird im Folgenden unter Bezugnahme auf die Zeichnungen näher beschrieben.
- **FIG. 1**: zeigt eine schematische Darstellung der verschiedenen Bearbeitungsschritte beim Herstellen von Kegelrädern gemäß Stand der Technik;
- **FIG. 2A**: zeigt eine schematische Darstellung der verschiedenen Bearbeitungsschritte eines ersten Verfahrens der Erfindung;
- **FIG. 2B**: zeigt eine schematische Darstellung der verschiedenen Bearbeitungsschritte eines zweiten Verfahrens der Erfindung;
- **FIG. 3A**: zeigt eine schematische Darstellung einer Zahnlücke eines beispielhaft gezeigten Stirnrades, dessen Zahnflanken mit einer Profilschleifscheibe auf konventionelle Art und Weise hartbearbeitet werden;
- **FIG. 3B**: zeigt eine schematische Darstellung einer Zahnlücke eines beispielhaft gezeigten Stirnrades, das aufgrund einer Wärmebehandlung einen deutlichen Härteverzug zeigt, wobei auch hier die Zahnflanken mit einer Profilschleifscheibe auf konventionelle Art und Weise hartbearbeitet werden sollen;
- **FIG. 4**: zeigt eine schematisierte Ansicht eines Teils einer Schleifmaschine mit einer Topfschleifscheibe zum Hartbearbeiten eines Kegelrades, wobei in dieser Maschine das Verfahren der Erfindung ausführbar ist.

Es geht um ein Verfahren 100, das speziell zum Hartbearbeiten von Verzahnungen an einem Zahnrad-Werkstück W in einer Verzahnungsmaschine entwickelt wurde.

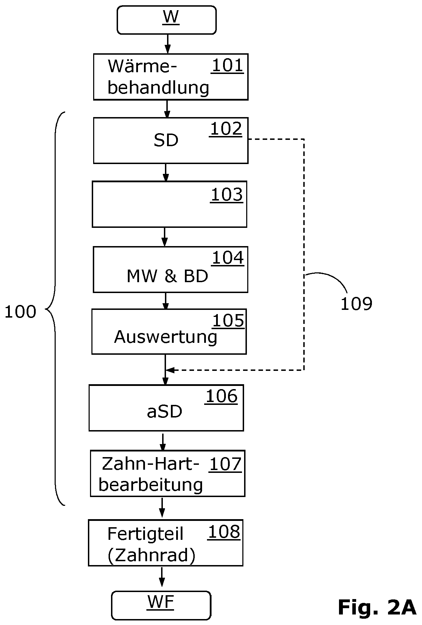

Bei mindestens einem Teil der Ausführungsformen umfasst das Verfahren 100 die in Fig. 2A gezeigten Teilschritte. Die gezeigten Teilschritte müssen nicht zwingend in der angegebenen Reihenfolge ausgeführt werden.

Das Verfahren 100 ist speziell zum optimierten Hartbearbeiten 107 der Zähne eines vorverzahnten und wärmebehandelten Zahnrad-Werkstücks W ausgelegt. Das Verfahren 100 kann z.B. mit dem Schritt 102 beginnen.

Im Rahmen des Verfahrens 100 kommt in einer Zahnrad-Bearbeitungsmaschine 20 ein Werkzeug 10 zum Einsatz. Je nach gewünschter Hartbearbeitung 107 kann es sich bei dem Werkzeug 10 um ein Schleifwerkzeug, ein Hohnwerkzeug oder um ein Läppwerkzeug handeln. Die Hartbearbeitung 107 kann aber auch eine Kombination von Schritten - wie z.B. das Schruppen mit einem ersten Werkzeug und das Schlichten mit einem zweiten Werkzeug - umfassen.

Bei der Zahnrad-Bearbeitungsmaschine 20 handelt es sich in jedem Fall um eine Maschine, die mehrere NC-gesteuerte Achsen umfasst, deren Bewegungen über eine NC-Steuerung S steuerbar und mittels Sensoren 23 und/oder Messgebern 24 erfassbar sind.

Bei mindestens einem Teil der Ausführungsformen kommt einer oder mehrere der folgenden Sensoren 23, 24 zum Einsatz:
- Vibrationsaufnehmer und seismische Sensoren,
- Akustiksensor (z.B. Ultraschall-Sensor),
- Magnetsensor,
- Strom- und/oder Spannungssensor,
- Drucksensor,
- berührungslos arbeitender Sensor (z.B. Hall-Sensor, optischer Sensor, induktiver Sensor oder kapazitiver Sensor),
- resistive Sensoren,
- taktiler Sensor.

Bei mindestens einem Teil der Ausführungsformen kommt einer oder mehrere der folgenden Messgeber 23, 24 zum Einsatz:
- linear oder nicht-linear arbeitender Weggeber,
- Wegmesssystem,
- Laufzeit-Messgeber,
- Winkel-Messgeber,
- Dreh-Messgeber,
- Drehgeber (z.B. Winkeldekoder),
- Messgeber zur Messung der momentanen Stromaufnahme eines Antriebs der Maschine 20,
- Spannungsmessgeber,
- (CCD-) kamera-basierte Messgeber.

Bei mindestens einem Teil der Ausführungsformen liefern die Sensoren und/oder Messgeber 23, 24 Information über die Bewegungen mindestens einer der NC-gesteuerten Achsen und Information, die mit Berührungen des Werkzeugs 10 mit dem Zahnrad-Werkstück W in Bezug stehen. Diese Informationen werden hier als Echtzeit-Messwerte MW und Bewegungsdaten BD bezeichnet. Zusammenfassend werden diese Informationen auch als Maschinentraces bezeichnet.

Das Verfahren 100 der Erfindung ist zum situativ angepassten Hartbearbeiten 107 mindestens eines Zahnes eines vorverzahnten und wärmebehandelten Zahnrad-Werkstücks W mit einem Werkzeug 10 ausgelegt. Dieses situativ angepasste Hartbearbeiten 107 findet in einer Zahnrad-Bearbeitungsmaschine 20 statt, die mehrere NC-gesteuerte Achsen umfasst, deren Bewegungen über eine NC-Steuerung S steuerbar sind. Außerdem umfasst die Zahnrad-Bearbeitungsmaschine 20 Sensoren und/oder Messgeber 23, 24, wie bereits erwähnt.

Bei mindestens einem Teil der Ausführungsformen umfasst das Verfahren 100 die folgenden Schritte. Es wird hier auf Fig. 2A Bezug genommen.

In einem Schritt 102 werden beispielsweise Soll-Daten SD für das Hartbearbeiten des Zahnrad-Werkstücks W bereitgestellt. Diese Soll-Daten SD können z.B. aus einem Speicher der Maschine 20 geladen werden, oder sie können z.B. im Rahmen einer Auslegung des Zahnrad-Werkstücks W berechnet werden.

Bevor die standardmässige Hartbearbeitung erfolgt, wird zuerst mindestens eine (vorbereitende) Relativbewegung 103 ausgeführt. Im Rahmen dieser Relativbewegung 103 bewegt die NC-Steuerung S das Werkzeug 10 relativ zu dem Zahnrad-Werkstück W, um das Werkzeug 10 kontrolliert mit dem Zahnrad-Werkstück W (z.B. mit einer Zahnflanke, einer Kopffläche, einer Stirnfläche oder einer Mantelfläche des Zahnrad-Werkstücks W) in Kontakt zu bringen. Die erste Relativbewegung 103 wird vorzugsweise bei allen Ausführungsformen anhand der Soll-Daten SD errechnet oder vorgegeben.

Während des Schrittes 103 werden Echtzeit-Messwerte MW und Bewegungsdaten BD mittels der Sensoren und/oder Messgeber 23, 24 erfasst. Dieser Schritt ist in Fig. 2A als Schritt 104 bezeichnet. Die Echtzeit-Messwerte MW und die Bewegungsdaten BD werden hier auch als Echtzeit-Prozessdaten oder als Maschinentraces bezeichnet.

Der Schritt 104 wird gefolgt durch einen Schritt 105, der dem Vornehmen einer Auswertung der Echtzeit-Messwerte MW zusammen mit Bewegungsdaten BD dient. Dieser Schritt 105 kann z.B. die Information liefern, dass einer der Zähne des Zahnrad-Werkstücks W eine zu große Zahnhöhe aufweist.

Die Auswertung der Echtzeit-Messwerte MW wird im Schritt 105 vorgenommen, um anhand der Echtzeit-Prozessdaten Ist-Information zum Zahnrad-Werkstück W zu bekommen, ohne dieses Zahnrad-Werkstück W separat einer Vermessung unterziehen zu müssen. D.h. es wird hier quasi auf indirektem Wege die Ist-Geometrie des Zahnrad-Werkstücks W in der Maschine 20 (mit den Mitteln der Maschine 20) ermittelt.

In einem Schritt 106 werden nun Anpassungen vorgenommen, die erforderlich sind, falls die Ist-Information erkennen lässt, dass das Zahnrad-Werkstück W nicht den Soll-Daten SD entspricht (z.B. da es bei der Wärmebehandlung 101 zu einem Härteverzug gekommen ist).

Bei mindestens einem Teil der Ausführungsformen werden diese Anpassungen vorgenommen, indem die ursprünglichen Soll-Daten SD umgerechnet/umgewandelt werden in angepasste Soll-Daten aSD. Anhand der angepassten Soll-Daten aSD ergibt sich eine angepasste Bewegungssequenz aBS für die einzelnen Schritte der Hartbearbeitung (Schritt 107). D.h., die Auswertung im Schritt 105 ermöglicht es der Steuerung S angepasste Relativbewegungen des Werkzeugs 10 relativ zum Zahnrad-Werkstück W auszuführen.

In Fig. 2A ist ein optionaler Pfad 109 gezeigt, um zu symbolisieren, dass im Schritt 106 die ursprünglichen Soll-Daten SD verändert werden können. Anstatt die ursprüngliche Soll-Daten SD zu verändern, können im Schritt 106 auch angepasste, werkstückspezifische Soll-Daten aSD neu berechnet werden.

Nun erfolgt das Hartbearbeiten mindestens eines Zahnes des Zahnrad-Werkstücks W durch ein Ausführen werkstückspezifisch angepasster Relativbewegungen (diese werkstückspezifisch angepassten Relativbewegungen werden durch eine angepasste Bewegungssequenz aBS definiert) in der Zahnrad-Bearbeitungsmaschine 20. In Fig. 2A ist dieser Schritt mit dem Bezugszeichen 107 bezeichnet. In einem Schritt 108 wird dann das Fertigteil WF bereitgestellt.

Im Schritt 107 gibt die NC-Steuerung S angepasste, werkstückspezifische Relativbewegungen des Werkzeugs 10 relativ zu dem Zahnrad-Werkstück W vor, wobei diese angepassten, werkstückspezifischen Relativbewegungen unter Verwendung von Ergebnissen der Auswertung im Schritt 105 ermittelt werden.

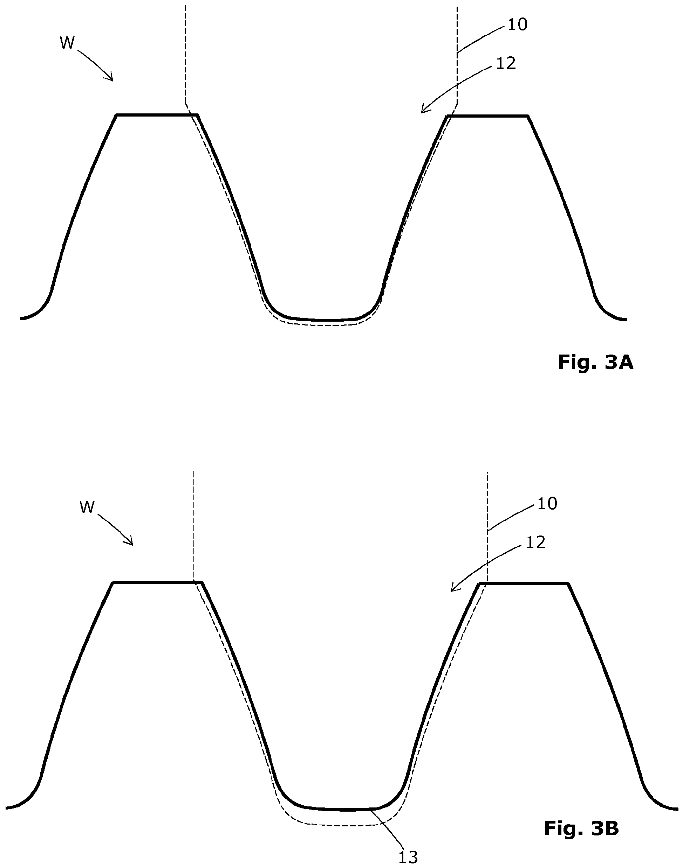

Das Prinzip, das hinter den Verfahren 100 der Erfindung steht, wird im Folgenden anhand eines stark vereinfachten Beispiels erläutert. In diesem Zusammenhang wird auf die schematisierten Darstellungen der Fig. 3A und 3B Bezug genommen. Es ist in beiden Abbildungen jeweils die schematisierte Ansicht einer Zahnlücke 12 eines Zahnrad-Werkstücks W (hier ein Stirnrad) gezeigt. Zusätzlich zu dem Zahnrad-Werkstück W ist ein Abschnitt eines Werkzeugs 10 (hier eine Profilschleifscheibe) gezeigt. In Fig. 3A ist eine Situation gezeigt, bei der das Werkstück W im Bereich der zu schleifenden Zahnlücke 12 ein normales Aufmaß hat. In Fig. 3B hingegen ist eine Situation gezeigt, in der das Werkstück W im Bereich der zu schleifenden Zahnlücke 12 einen deutlichen Härteverzug aufweist. Der Härteverzug zeigt sich in diesem stark schematisierten Beispiel vor allem im Bereich des Zahnfusses 13 der Zahnlücke 12. Durch den Härteverzug hat sich im Bereich des Zahnfusses 13 ein deutlich erhöhtes Aufmaß ergeben. Wenn diese Zahnlücke 12 nun mit dem Werkzeug 10 auf konventionelle Art und Weise bearbeitet würde, so würde sich für das Werkzeug 10 eine starke Abdrängung ergeben und im Bereich der Zahnlücke 12 kann es am Zahnfuß 13 zu Schleifbrand kommen.

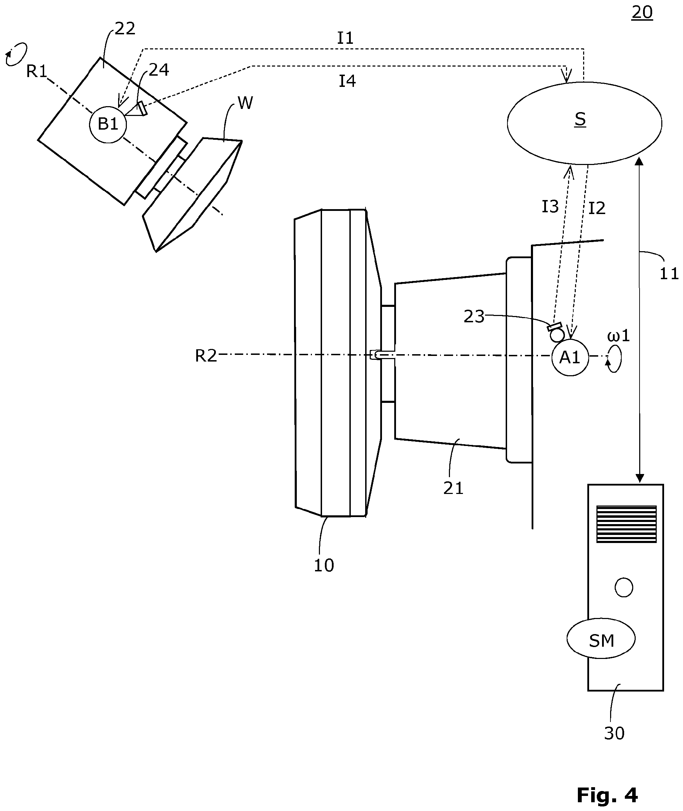

Gemäß einer Ausführungsform der Erfindung kann nun das Werkzeug 10 langsam in die Zahnlücke 12 zugestellt werden, während das Werkzeug 10 um die Rotationsachse R2 drehangetrieben wird. Dem Antrieb der Werkzeugspindel 21 ist bei diesem Ausführungsbeispiel beispielsweise ein Messgeber 23 zugeordnet (siehe z.B. Fig. 4), der die Stromaufnahme des Antriebs beobachtet/aufzeichnet. Solange sich das Werkzeug 10 ohne Berührung mit den Zahnflanken und dem Zahnfuß 13 frei in der Luft bewegt, ist die Stromaufnahme des Antriebs relativ niedrig. Falls nun die Zahnflanken und/oder der Zahnfuß 13 der Zahnlücke 12 mit dem Werkzeug 10 in Berührung kommt/kommen, erhöht sich sprungartig die Stromaufnahme. In diesem Fall liefert der Messgeber Information, die mit einer Berührung des Werkzeugs 10 mit dem Zahnrad-Werkstück W in Bezug steht. Diese Information wird hier generell als Echtzeit-Messwert MW bezeichnet. Zusätzlich wird mindestens in diesem Zeitpunkt auch Information erfasst, welche die momentane Zustellposition (Eintauchtiefe) des Werkzeugs 10 enthält. Derartige Informationen werden hier generell als Bewegungsdaten BD bezeichnet.

Ein Softwaremodul SM, das z.B. Teil der Steuerung S sein kann, ist nun in der Lage anhand des Echtzeit-Messwerts MW und der Bewegungsdaten BD das konkrete Aufmaß der betroffenen Zahnlücke 12 im 3-dimensionalen Raum zu definieren. Dieser Vorgang wird hier als Auswertung (Schritt 105) bezeichnet, wobei es sich um eine rechnergestützte Auswertung, respektive um eine rechnerische Auswertung handelt.

Da nun das Softwaremodul SM und/oder die Steuerung S die Ist-Geometrie des Zahnrad-Werkstücks W kennt (um genau zu sein, ist im konkreten Beispiel lediglich das Aufmaß der Zahnlücke 12 des Zahnrad-Werkstücks W bekannt), kann die Bewegungssequenz BS, welche den Standardablauf für die Hartbearbeitung des Zahnrad-Werkstücks W definiert, angepasst werden. Auf diesem Weg erhält man eine angepasste, werkstückspezifische Bewegungssequenz aBS.

Die angepasste, werkstückspezifische Bewegungssequenz aBS kann z.B. bei dem Beispiel der Fig. 3B einige Teilschritte umfassen, die dazu dienen die betroffene Zahnlücke 12 mit einer reduzierten Zustellgeschwindigkeit zu schleifen, um Schleifbrand zu vermeiden.

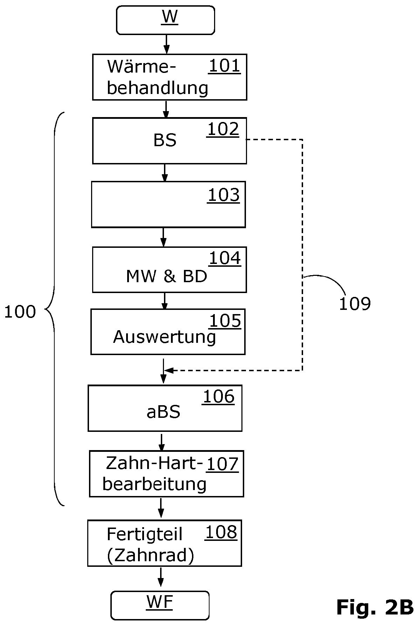

Das Verfahren 100 kann bei mindestens einem Teil der Ausführungsformen auch die folgenden Schritte umfassen. Es wird hier auf Fig. 2B Bezug genommen.

In einem Schritt 102 wird eine vorgegebene Bewegungssequenz BS für das Hartbearbeiten des Zahnrad-Werkstücks W bereitgestellt. Diese Bewegungssequenz BS kann z.B. aus einem Speicher der Maschine 20 geladen werden, oder sie kann anhand von Soll-Daten SD des Zahnrad-Werkstücks W, anhand der Daten des Werkzeugs 10 und der Daten der Maschine 20 berechnet werden.

Bevor die standardmässige Hartbearbeitung erfolgt, wird zuerst mindestens eine (vorbereitende) Relativbewegung 103 ausgeführt (diese Relativbewegung 103 kann auch eine Bewegungssequenz umfassen). Im Rahmen dieser Relativbewegung(en) 103 bewegt die NC-Steuerung S das Werkzeug 10 relativ zu dem Zahnrad-Werkstück W, um das Werkzeug 10 kontrolliert mit dem Zahnrad-Werkstück W in Kontakt zu bringen. Dabei werden vorzugsweise zu starke Berührungen oder Kollisionen vermieden, indem die Relativbewegungen 103 zu einem vorsichtigen iterativen Annähern des Werkzeugs 10 führen.

Während des Schrittes 103 werden Echtzeit-Messwerte MW und Bewegungsdaten BD mittels der Sensoren und/oder Messgeber 23, 24 erfasst. Dieser Schritt ist in Fig. 2 als Schritt 104 bezeichnet. Die Echtzeit-Messwerte MW und die Bewegungsdaten BD werden auch hier als Echtzeit-Prozessdaten bezeichnet.

Der Schritt 104 wird gefolgt durch einen Schritt 105, der dem Vornehmen einer Auswertung der Echtzeit-Messwerte MW zusammen mit den Bewegungsdaten BD dient. Um auf das einfache Beispiel der Fig. 3A zurück zu kommen, liefert dieser Schritt 105 die Information, dass eine der Zahnlücken 12 eine zu großes Aufmaß aufweist und ab welcher Zustelltiefe es zwischen dem Werkzeug 10 und den Zahnflanken zu einem Erstkontakt kam.

In einem Schritt 106 wird nun eine angepasste, werkstückspezifische Bewegungssequenz aBS ermittelt. Dies geschieht vorzugsweise durch ein Anpassen der vorgegebenen Bewegungssequenz BS anhand der Ergebnisse der Auswertung im Schritt 105. In Fig. 2B ist ein optionaler Pfad 109 gezeigt, um zu symbolisieren, dass im Schritt 106 die ursprüngliche Bewegungssequenz BS verändert werden kann. Anstatt die ursprüngliche Bewegungssequenz BS zu verändern, kann im Schritt 106 auch eine neue werkstückspezifische Bewegungssequenz aBS berechnet werden.

Nun erfolgt das Hartbearbeiten des Zahnrad-Werkstücks W durch ein Ausführen der werkstückspezifischen Bewegungssequenz aBS in der Zahnrad-Bearbeitungsmaschine 20. In Fig. 2B ist dieser Schritt mit dem Bezugszeichen 107 bezeichnet. In einem Schritt 108 wird dann das Fertigteil WF bereitgestellt.

Es ist häufig so, dass anhand der Soll-Daten SD des Zahnrad-Werkstücks W eine (Soll-)Bewegungssequenz BS der NC-gesteuerten Achsen der Maschine 20 vorgegeben wird. Diese Bewegungssequenz BS kann z.B. ermittelt werden, indem Details der Maschine 20 und Details des Werkzeugs 10 berücksichtig werden. Die Bewegungssequenz BS, die eine Reihe von Relativbewegungen umfassen kann, muss jedoch nicht als Liste einzelner Relativbewegungen vorliegen, sondern die Bewegungssequenz BS kann sich z.B. durch Maschinendaten der Maschine 20 definieren. Die NC-Steuerung S lädt diese Maschinendaten und ermittelt dann on-the-fly die entsprechenden Relativbewegungen und steuert die Antriebe der betroffenen NC-gesteuerten Achsen so, dass diese die Relativbewegungen ausführen.

Das Anpassen der Relativbewegungen kann zum Beispiel dazu führen, dass mindestens ein (Ver-)Fahrweg (z.B. die Zustellbewegung) des Werkzeugs 10 relativ zum Zahnrad-Werkstück W geändert wird, oder das bei einem iterativen Bearbeitungsverfahren die Anzahl der Schritte erhöht oder reduziert werden, dass die Schrittweite erhöht oder reduziert wird, oder dass ein Geschwindigkeitsprofil angepasst wird, um nur einige Beispiele zu geben. Das Anpassen der Relativbewegungen kann zum Beispiel kann z.B. auch ein geändertes Bewegungs- und/oder Geschwindigkeitsprofil mindestens einer Relativbewegung umfassen.

Generell kann im Schritt 104 das Bereitstellen der Echtzeit-Messwerte MW mittels der Sensoren und/oder Messgeber 23, 24 in der Zahnrad-Bearbeitungsmaschine 20 so vorgenommen werden, dass Kontaktpunkte und/oder Kontaktbereiche, die beim Ausführen der ersten Relativbewegung 103 zwischen dem Werkzeug 10 und dem Zahnrad-Werkstück W auftreten, ermittelt werden können. Diese Kontaktpunkte und/oder Kontaktbereiche können beispielsweise im 3-dimensionalen Bezugssystem der Maschine 20 definiert sein. Vergleicht man nun die Kontaktpunkte und/oder Kontaktbereiche mit Soll-Daten SD des Zahnrad-Werkstücks W, so können anhand dieses Vergleichs Abweichungen der Ist-Geometrie gegenüber der Soll-Geometrie (definiert durch die Soll-Daten SD) errechnet werden. Diese Abweichungen können gemäß dem Verfahren 100 der Erfindung dazu eingesetzt werden, um im Schritt 107 angepasste Relativbewegungen für die Hartbearbeitung vorzugeben.

Bei mindestens einem Teil der Ausführungsformen kann in einem Teilschritt des Verfahrens 100 anhand der Kontaktpunkte und/oder -bereiche ein Rundlauffehler oder ein Wärmeverzug des Zahnrad-Werkstücks W ermittelt und im 3-dimensionalen Raum definiert werden.

Die Kontaktpunkte und/oder -bereiche können beim Ausführen der ersten Relativbewegung 103 z.B. mindestens an einer Zahnflanke eines Zahnes des Zahnrad-Werkstücks W mit dem Werkzeug 10 ermittelt werden, wobei während des Ausführens der ersten Relativbewegung 103 die Echtzeit-Messwerte MW und Bewegungsdaten BD mittels der Sensoren und/oder Messgeber 23, 24 bereit gestellt werden.

Beim Ausführen der ersten Relativbewegung 103 kann beispielsweise mindestens eine Stirnfläche des Zahnrad-Werkstücks W mit einem als Werkzeug 10 dienenden Drehstab einer Drehbearbeitung unterzogen werden. Durch diese Drehbearbeitung kann z.B. einen Härteverzug der Stirnfläche behoben werden. Während der Drehbearbeitung werden dann die Echtzeit-Messwerte MW und Bewegungsdaten BD mittels der Sensoren und/oder Messgeber 23, 24 bereit gestellt, um auf diesem Weg die Ist-Geometrie des Zahnrad-Werkstücks W zu ermitteln und um anhand der Kenntnis der Ist-Geometrie die Bearbeitungsabläufe der Hartbearbeitung 107 anzupassen.

Es gibt verschiedene Gründe, warum das Verfahren 100 angewendet werden kann. Im Folgenden sind einige einfache Beispiele genannt. Dadurch, dass angepasste, werkstückspezifische Relativbewegungen vorgegeben werden, kann beispielsweise eine Beschädigung des Werkzeugs 10 vermieden werden. Es kann aber beispielsweise auch Schleifbrand am Zahnrad-Werkstück W vermieden werden, der auftreten kann, wenn das Werkzeug 10 zu schnell oder mit zu grosser Zustellung gegen das Zahnrad-Werkstück W bewegt wird. Es kann aber zum Beispiel auch vermieden werden, dass im Rahmen des Hartbearbeitens 107 des Zahnrad-Werkstücks W das Werkzeug 10 eine Härteschicht, die bei der Wärmebehandlung 101 mit einer gewissen Dicke am Zahnrad-Werkstück W entsteht, partiell durchdringt und damit beschädigt.

Eine Zahnrad-Bearbeitungsmaschine 20 der Erfindung umfasst beispielsweise, wie in Fig. 4 schematisch gezeigt, eine Werkstückspindel 22, die zur Aufnahme eines Zahnrad-Werkstücks W (hier in Form eines stilisiert dargestellten Tellerrads) ausgelegt ist. Ausserdem umfasst die Maschine 20 eine Werkzeugspindel 21 zur Aufnahme eines Schleifwerkzeugs 10 (hier in Form einer Topfschleifscheibe) sowie mehrere Antriebe (z.B. A1, B1 und weitere Antriebe, die nicht in Fig. 4 gezeigt sind) zum Hartbearbeiten des Zahnrad-Werkstücks W.

Das Schleifwerkzeug 10 führt beim Hartbearbeiten des Zahnrad-Werkstücks W eine Rotation ω1 um die Rotationsachse R2 der Werkzeugspindel 21 aus. Der entsprechende Achsantrieb ist mit A1 bezeichnet. Das Schleifwerkzeug 10 greift in das Zahnrad-Werkstück W ein, um Material abzutragen. Weiterhin ist eine NC-Steuerung S gezeigt, die dazu ausgelegt ist die Bewegungsabläufe in der Maschine 20 zu steuern, wie durch die Steuersignale I1, 12 angedeutet.

Weiterhin ist ein optionaler Rechner 30 gezeigt, der speziell dazu ausgelegt (programmiert) ist Teile der Verfahrensschritte des Verfahrens 100 auszuführen. Der Rechner 30 kann z.B. ein entsprechendes Softwaremodul SM umfassen. Der Rechner 30 ist kommunikationstechnisch mit der Maschine 20 und/oder der Steuerung S verbunden, wie in Fig. 4 durch die Verbindung 11 angedeutet. Der Rechner 30 muss nicht zwingend bei den Ausführungsformen der Erfindung als vollständiger Rechner ausgeführt sein. Es kann auch bei allen Ausführungsformen ein Rechnermodul, ein Chipmodul oder eine Steckkarte mit Prozessor oder dergleichen eingesetzt werden. Der Rechner 30 kann bei allen Ausführungsformen auch Teil der Steuerung S sein, oder die Steuerung S kann Teil des Rechners 30 sein. Das Softwaremodul SM kann bei allen Ausführungsformen auch so programmiert/installiert sein, dass es durch die Steuerung S ausführbar ist.

Um die Erfindung in der Maschine 20 der Fig. 4 ausführen zu können, umfasst diese Maschine 20 mindestens einen Sensor oder Messgeber 23, der im gezeigten Beispiel der Werkzeugspindel 21 zugeordnet ist und einen Sensor oder Messgeber 24, der im gezeigten Beispiel der Werkstückspindel 22 zugeordnet ist. Der Sensor oder Messgeber 23 ist beispielsweise mittels einer Daten- oder Informationsleitung 13 mit der Steuerung S und/oder mit dem optionalen Rechner 30 verbunden. Der Messgeber oder Sensor 24 ist beispielsweise mittels einer Daten- oder Informationsleitung I4 mit der Steuerung S und/oder mit dem optionalen Rechner 30 verbunden.

Es kann z.B. ein Drehgeber (z.B. Winkeldekoder) als Messgeber 24 dienen. Dieser liefert der Steuerung S und/oder dem Rechner 30 Bewegungsdaten BD in Form von Winkelinformation. Als Messgeber 23 kann z.B. ein Messgeber eingesetzt werden, der zur Messung der momentanen Stromaufnahme des Antriebs A1 der Maschine 20 ausgelegt ist.

Das in Fig. 4 dargestellte Ausführungsbeispiel ist lediglich als eine mögliche Ausführungsform der Erfindung zu verstehen.

### Bezugszeichen:

| | |
|---|---|
| Verfahren | 1 |
| Bohrung erstellen | 2 |
| Drehbearbeitung | 3 |
| Kegelradfräsen | 4 |
| Entgraten | 5 |
| Wärmebehandlung | 6 |
| Nach- oder Feinbearbeitung / Hartbearbeitung | 7 |
| Bereitstellen des Fertigteils/Zahnrades | 8 |
| | |
| Werkzeug/Schleifwerkzeug | 10 |
| Verbindung | 11 |
| Zahnlücke | 12 |
| Zahnfuß | 13 |
| | |
| Zahnrad-Bearbeitungsmaschine | 20 |
| Werkzeugspindel | 21 |
| Werkstückspindel | 22 |
| Sensor / Messgeber | 23 |
| Messgeber / Sensor | 24 |
| | |
| Rechner | 30 |
| | |
| Verfahren | 100 |
| Wärmebehandlung | 101 |
| Bereitstellen einer vorgegebenen Bewegungssequenz | 102 |
| erste Relativbewegungen | 103 |
| Bereitstellen von Echtzeit-Messwerten | 104 |
| Auswertung | 105 |
| Bereitstellen angepasste Bewegungssequenz | 106 |
| Nach- oder Feinbearbeitung / Hartbearbeitung | 107 |
| Bereitstellen des Fertigteils/Zahnrads | 108 |
| Pfad | 109 |
| | |
| Antriebe | A1, B1 |
| Bewegungsdaten | BD |
| angepasste Bewegungssequenz | aBS |
| vorgegebene Bewegungssequenz | BS |
| Steuersignale | I1, I2 |
| Daten- oder Informationsleitungen | I3, I4 |
| Echtzeit-Messwerte | MW |
| Rotationsachse | R1 |
| Rotationsachse | R2 |
| NC-Steuerung | S |
| Soll-Daten | SD |
| angepasste Soll-Daten | aSD |
| Softwaremodul | SM |
| Zahnrad-Werkstück | W |
| Werkstückrohling | W1 |
| Fertigteil | WF |
| Rotation | ω1 |

## Patentansprüche

1. Verfahren (100) zum Hartbearbeiten (107) eines vorverzahnten und wärmebehandelten Zahnrad-Werkstücks (W) mit einem Werkzeug (10) in einer Zahnrad-Bearbeitungsmaschine (20), die mehrere NC-gesteuerte Achsen umfasst, deren Bewegungen über eine NC-Steuerung (S) steuerbar sind und wobei die Zahnrad-Bearbeitungsmaschine (20) Sensoren und/oder Messgeber aufweist, umfassend die folgenden Schritte:
- Bereitstellen (102) von Soll-Daten (SD) des Zahnrad-Werkstücks (W),
- Ermitteln einer ersten Relativbewegung (103) des Werkzeugs (10) relativ zum Zahnrad-Werkstück (W) anhand der Soll-Daten (SD),
- Ausführen der ersten Relativbewegung (103), wobei die NC-Steuerung (S) das Werkzeug (10) durch das Ausführen der ersten Relativbewegung (103) kontrolliert mit dem Zahnrad-Werkstück (W) in Kontakt bringt, und
- Hartbearbeiten mindestens eines Bereichs eines Zahnes des Zahnrad-Werkstücks (W),
**dadurch gekennzeichnet, dass** das Verfahren auch die folgenden Schritte umfasst:
- Bereitstellen (104) von Echtzeit-Messwerten (MW) und Bewegungsdaten (BD) mittels der Sensoren und/oder Messgeber während des Ausführens der ersten Relativbewegung (103), und
- Vornehmen einer Auswertung (105) der Echtzeit-Messwerte (MW) zusammen mit den Bewegungsdaten (BD) und Ermitteln angepasster, werkstückspezifischer Relativbewegungen,
- wobei beim Hartbearbeiten (107) die NC-Steuerung (S) die angepassten, werkstückspezifischen Relativbewegungen des Werkzeugs (10) relativ zu dem Zahnrad-Werkstück (W) ausführt, wobei:
- in einem Zwischenschritt anhand der Soll-Daten (SD) eine Bewegungssequenz (BS) vorgegeben wird und
- in einem weiteren Schritt Ergebnisse der Auswertung (105) eingesetzt werden, um eine angepasste, werkstückspezifische Bewegungssequenz (aBS) zu ermitteln, wobei diese angepasste, werkstückspezifische Bewegungssequenz (aBS) die Relativbewegungen definiert, die beim Hartbearbeiten (107) des Zahnrad-Werkstücks (W) ausgeführt werden.

2. Verfahren (100) nach Anspruch 1, **dadurch gekennzeichnet, dass** das Ermitteln der angepassten, werkstückspezifischen Bewegungssequenz (aBS) dadurch erfolgt, dass ein Anpassen der vorgegebenen Bewegungssequenz (BS) anhand der Ergebnisse der Auswertung (105) vorgenommen wird.

3. Verfahren (100) nach einem der Ansprüche 1 oder 2, **dadurch gekennzeichnet, dass** die Auswertung (105) der Echtzeit-Messwerte (MW) zusammen mit Bewegungsdaten (BD) dazu ausgelegt ist, die Ist-Geometrie des Zahnrad-Werkstücks (W) nach einer Wärmebehandlung und vor dem Hartbearbeiten (107) zu bestimmen.

4. Verfahren (100) nach einem der Ansprüche 1 bis 3, **dadurch gekennzeichnet, dass** die Auswertung (105) eine Abweichung der Ist-Geometrie des Zahnrad-Werkstücks (W) nach einer Wärmebehandlung gegenüber einer Soll-Geometrie des Zahnrad-Werkstücks (W) ermittelt.

5. Verfahren (100) nach einem der Ansprüche 1 bis 4, **dadurch gekennzeichnet, dass** das Bereitstellen der Echtzeit-Messwerte (MW) mittels der Sensoren und/oder Messgeber in der Zahnrad-Bearbeitungsmaschine (20) vorgenommen wird, um Kontaktpunkte und/oder -bereiche, die beim Ausführen der ersten Relativbewegung (103) zwischen dem Werkzeug (10) und dem Zahnrad-Werkstück (W) auftreten, zu ermitteln.

6. Verfahren (100) nach Anspruch 5, **dadurch gekennzeichnet, dass** in einem Teilschritt des Verfahrens (100) anhand der Kontaktpunkte und/oder - bereiche ein Rundlauffehler oder ein Wärmeverzug des Zahnrad-Werkstücks (W) ermittelt und im 3-dimensionalen Raum definiert wird.

7. Verfahren (100) nach einem der Ansprüche 1 bis 5, **dadurch gekennzeichnet, dass** die angepassten, werkstückspezifischen Relativbewegungen vorgegeben werden, um eine Beschädigung des Werkzeugs (10) zu vermeiden und/oder um Schleifbrand am Zahnrad-Werkstück (W) zu vermeiden und/oder um zu vermeiden, dass im Rahmen des Hartbearbeitens (107) des Zahnrad-Werkstücks (W) das Werkzeug (10) eine Härteschicht des Zahnrad-Werkstücks (W) durchdringt.

8. Verfahren (100) nach einem der Ansprüche 1 bis 7, **dadurch gekennzeichnet, dass** die angepassten, werkstückspezifischen Relativbewegungen mindestens einen geänderten Fahrweg des Werkzeugs (10) relativ zum Zahnrad-Werkstück (W) umfassen.

9. Verfahren (100) nach einem der Ansprüche 1 bis 8, **dadurch gekennzeichnet, dass** die angepassten, werkstückspezifischen Relativbewegungen vorgegeben werden, um Relativbewegungen werkstückspezifisch zu optimieren.

10. Verfahren (100) nach einem der Ansprüche 1 bis 9, **dadurch gekennzeichnet, dass** beim Ausführen der ersten Relativbewegung (103) mindestens eine Zahnflanke eines Zahnes des Zahnrad-Werkstücks (W) mit dem Werkzeug (10) berührt wird, wobei während des Ausführens der ersten Relativbewegung (103) die Echtzeit-Messwerte (MW) und Bewegungsdaten (BD) mittels der Sensoren und/oder Messgeber bereit gestellt werden.

11. Verfahren (100) nach einem der Ansprüche 1 bis 9, **dadurch gekennzeichnet, dass** beim Ausführen der ersten Relativbewegung (103) mindestens eine Stirnfläche des Zahnrad-Werkstücks (W) mit einem als Werkzeug (10) dienenden Drehstab einer Drehbearbeitung unterzogen wird, um einen Verzug der Stirnfläche zu beheben, wobei während der Drehbearbeitung die Echtzeit-Messwerte (MW) und Bewegungsdaten (BD) mittels der Sensoren und/oder Messgeber bereit gestellt werden.

## Claims

1. A method (100) for the hard machining (107) of a precut and heat-treated gearwheel workpiece (W) using a tool (10) in a gear processing machine (20), which comprises multiple NC-controlled axes, the movements of which are controllable via an NC-controller (S), and wherein the gear processing machine (20) has sensors and/or detectors, comprising the following steps:
- providing (102) target data (SD) of the gearwheel workpiece (W),
- determining a first relative movement (103) of the tool (10) in relation to the gearwheel workpiece (W) on the basis of the target data (SD),
- executing the first relative movement (103), wherein the NC-controller (S) brings the tool (10) into contact with the gearwheel workpiece (W) in a controlled manner by the execution of the first relative movement (103), and hard machining (107) of at least one region of a tooth of the gearwheel workpiece (W), **characterized in that** the method also comprising the following steps:
- providing (104) real-time measured values (MW) and movement data (BD) by means of the sensors and/or detectors during the execution of the first relative movement (103),
- performing an analysis (105) of the real-time measured values (MW) together with the movement data (BD) and determining adapted, workpiece-specific relative movements,
- wherein, during hard machining (107), the NC-controller (S) executes the adapted, workpiece-specific relative movements of the tool (10) in relation to the gearwheel workpiece (W), wherein
- a movement sequence (BS) is predetermined on the basis of the target data (SD) in an intermediate step and wherein
- results of the analysis (105) are used in a further step to determine an adapted, workpiece-specific movement sequence (aBS), wherein this adapted, workpiece-specific movement sequence (aBS) defines the relative movements which are executed during the hard machining (107) of the gearwheel workpiece (W).

2. The method (100) according to claim 1, **characterized in that** the determination of the adapted, workpiece-specific movement sequence (aBS) is carried out **in that** an adaptation of the predetermined movement sequence (BS) is performed on the basis of the results of the analysis (105).

3. The method (100) according to any one of claims 1 or 2, **characterized in that** the analysis (105) of the real-time measured values (MW) together with the movement data (BD) is designed to determine the actual geometry of the gearwheel workpiece (W) after a heat treatment and before the hard machining (107).

4. The method (100) according to any one of claims 1 to 3, **characterized in that** the analysis (105) determines a deviation of the actual geometry of the gearwheel workpiece (W) after a heat treatment in relation to a target geometry of the gearwheel workpiece (W).

5. The method (100) according to any one of claims 1 to 4, **characterized in that** the provision of the real-time measured values (MW) is performed by means of the sensors and/or detectors in the gear processing machine (20) to determine contact points and/or regions which occur between the tool (10) and the gearwheel workpiece (W) upon the execution of the first relative movement (103).

6. The method (100) according to claim 5, **characterized in that**, in a substep of the method (100), a concentricity error or a thermal distortion of the gearwheel workpiece (W) is determined on the basis of the contact points and/or regions and defined in three-dimensional space.

7. The method (100) according to any one of claims 1 to 8, **characterized in that** the adapted, workpiece-specific relative movements are predetermined to avoid damage to the tool (10) and/or to avoid overheating due to grinding on the gearwheel workpiece (W) and/or to avoid the tool (10) penetrating a hardened layer of the gearwheel workpiece (W) in the scope of the hard machining (107) of the gearwheel workpiece (W).

8. The method (100) according to any one of claims 1 to 7, **characterized in that** the adapted, workpiece-specific relative movements comprise at least one changed travel distance of the tool (10) in relation to the gearwheel workpiece (W).

9. The method (100) according to any one of claims 1 to 9, **characterized in that** the adapted, workpiece-specific relative movements are predetermined to optimize relative movements in a workpiece-specific manner.

10. The method (100) according to any one of claims 1 to 9, **characterized in that**, during the execution of the first relative movement (103), at least one tooth flank of a tooth of the gearwheel workpiece (W) is contacted using the tool (10), wherein during the execution of the first relative movement (103), the real-time measured values (MW) and movement data (BD) are provided by means of the sensors and/or detectors.

11. The method (100) according to any one of claims 1 to 11, **characterized in that**, during the execution of the first relative movement (103), at least one end face of the gearwheel workpiece (W) is subjected to turning using a torsion bar used as a tool (10) to remedy a distortion of the end face, wherein the real-time measured values (MW) and movement data (BD) are provided by means of the sensors and/or detectors during the turning.

## Revendications

1. Procédé (100) pour l'usinage dur (107) d'une pièce à usiner de roue dentée (W) pré-dentée et traitée thermiquement avec un outil (10) dans une machine d'usinage de roue dentée (20), qui comprend plusieurs axes commandés par CN, dont les mouvements peuvent être commandés par une commande CN (S) et la machine d'usinage de roue dentée (20) présentant des capteurs et/ou des capteurs de mesure, comprenant les étapes suivantes :
- fournir (102) des données de consigne (SD) de la pièce à usiner de roue dentée (W),
- déterminer un premier mouvement relatif (103) de l'outil (10) par rapport à la pièce à usiner (W) de la roue dentée à l'aide des données de consigne (SD),
- l'exécution du premier mouvement relatif (103), la commande numérique (S) mettant l'outil (10) en contact de manière contrôlée avec la pièce à usiner à engrenage (W) en exécutant le premier mouvement relatif (103), et l'usinage dur (107) d'au moins une partie d'une dent de la pièce à usiner à engrenage (W), **caractérisé en ce que** le procédé comprend également les étapes suivantes :
- fournir (104) des valeurs de mesure en temps réel (MW) et des données de mouvement (BD) au moyen des capteurs et/ou des transducteurs pendant l'exécution du premier mouvement relatif (103),
- procéder à une évaluation (105) des valeurs de mesure en temps réel (MW) conjointement avec les données de mouvement (BD) et déterminer des mouvements relatifs adaptés et spécifiques à la pièce à usiner,
- dans lequel, lors de l'usinage dur (107), la commande numérique (S) exécute les mouvements relatifs adaptés et spécifiques à la pièce de l'outil (10) par rapport à la pièce (W) de la roue dentée, dans lequel
- dans une étape intermédiaire, une séquence de mouvement (BS) est prédéfinie à l'aide des données de consigne (SD) et
- dans une autre étape, des résultats de l'évaluation (105) sont utilisés pour déterminer une séquence de mouvements (aBS) adaptée et spécifique à la pièce, cette séquence de mouvements (aBS) adaptée et spécifique à la pièce définissant les mouvements relatifs qui sont exécutés lors de l'usinage dur (107) de la pièce à usiner à roue dentée (W).

2. Procédé (100) selon la revendication 1, **caractérisé en ce que** la détermination de la séquence de mouvement (aBS) adaptée et spécifique à la pièce s'effectue en procédant à une adaptation de la séquence de mouvement (BS) prédéfinie à l'aide des résultats de l'évaluation (105).

3. Procédé (100) selon l'une des revendications 1 ou 2, **caractérisé en ce que** l'évaluation (105) des valeurs de mesure en temps réel (MW) conjointement avec des données de mouvement (BD) est conçue pour déterminer la géométrie réelle de la pièce à usiner de roue dentée (W) après un traitement thermique et avant l'usinage dur (107).

4. Procédé (100) selon l'une des revendications 1 à 3, **caractérisé en ce que** l'évaluation (105) détermine un écart de la géométrie réelle de la pièce de roue dentée (W) après un traitement thermique par rapport à une géométrie de consigne de la pièce de roue dentée (W).

5. Procédé (100) selon l'une des revendications 1 à 4, **caractérisé en ce que** la mise à disposition des valeurs de mesure en temps réel (MW) est effectuée au moyen des capteurs et/ou des transmetteurs de mesure dans la machine d'usinage d'engrenages (20), afin de déterminer les points de contact et/ou les zones de contact qui apparaissent lors de l'exécution du premier mouvement relatif (103) entre l'outil (10) et la pièce à usiner d'engrenage (W).

6. Procédé (100) selon la revendication 5, **caractérisé en ce que**, dans une étape partielle du procédé (100), un défaut de concentricité ou une déformation thermique de la pièce à usiner de roue dentée (W) est déterminé à l'aide des points de contact et/ou des zones de contact et est défini dans l'espace tridimensionnel.

7. Procédé (100) selon l'une des revendications 1 à 5, **caractérisé en ce que** les mouvements relatifs adaptés et spécifiques à la pièce sont prédéfinis pour éviter d'endommager l'outil (10) et/ou pour éviter les brûlures de meulage sur la pièce à usiner (W) de la roue dentée et/ou pour éviter que, dans le cadre de l'usinage dur (107) de la pièce à usiner (W) de la roue dentée, l'outil (10) ne traverse une couche de durcissement de la pièce à usiner (W) de la roue dentée.

8. Procédé (100) selon l'une des revendications 1 à 7, **caractérisé en ce que** les mouvements relatifs adaptés, spécifiques à la pièce, comprennent au moins une modification de la trajectoire de l'outil (10) par rapport à la pièce à usiner (W) de la roue dentée.

9. Procédé (100) selon l'une des revendications 1 à 8, **caractérisé en ce que** les mouvements relatifs adaptés et spécifiques à la pièce sont prédéfinis afin d'optimiser les mouvements relatifs de manière spécifique à la pièce.

10. Procédé (100) selon l'une des revendications 1 à 9, **caractérisé en ce que** lors de l'exécution du premier mouvement relatif (103), au moins un flanc de dent d'une dent de la pièce à usiner de roue dentée (W) est touché par l'outil (10), les valeurs de mesure en temps réel (MW) et les données de mouvement (BD) étant mises à disposition au moyen des capteurs et/ou des capteurs de mesure pendant l'exécution du premier mouvement relatif (103).

11. Procédé (100) selon l'une des revendications 1 à 9, **caractérisé en ce que**, lors de l'exécution du premier mouvement relatif (103), au moins une face frontale de la pièce à usiner (W) de la roue dentée est soumise à un usinage par tournage avec une barre de tournage servant d'outil (10), afin de remédier à une déformation de la face frontale, les valeurs de mesure en temps réel (MW) et les données de mouvement (BD) étant mises à disposition pendant l'usinage par tournage au moyen des capteurs et/ou des capteurs de mesure.
